# EUROPÄISCHE PATENTSCHRIFT

(11) **EP 2 002 175 B1**
(45) Veröffentlichungstag und Bekanntmachung des Hinweises auf die Patenterteilung: **14.06.2017**
(21) Anmeldenummer: 07723402.9
(22) Anmeldetag: 20.03.2007
(51) Int. Cl.: F21S 4/00, F21V 23/00

(54) **LEUCHTFLIESE**
ILLUMINATED TILE
CARREAU DE CARRELAGE LUMINEUX

(30) Priorität: 31.03.2006 DE 102006015437
(43) Veröffentlichungstag der Anmeldung: 17.12.2008
(73) Patentinhaber: Merck Patent GmbH, 64293 Darmstadt (DE)
(72) Erfinder: BIEBEL, Alexander, 64404 Bickenbach (DE); MEISEL, Thomas, 88697 Bernatingen (DE)
(86) Internationale Anmeldenummer: PCT/EP2007/002436
(87) Internationale Veröffentlichungsnummer: WO 2007/112851

(56) Entgegenhaltungen:
- DE-A1-102005 002 178
- US-A1- 2004 252 488
- US-A1- 2005 248 935

## Beschreibung

Die vorliegende Erfindung betrifft eine Leuchtfliese nach dem Oberbegriff des Patentanspruchs 1. Zur Gestaltung von Wand- und Bodenbelägen in Gebäuden, insbesondere Bädern, sind bereits derartige beleuchtete Fliesen bekannt. Solche beleuchtete Fliesen werden beispielsweise in der DE 20 2004 006 389 U1 und der DE 10 2005 002 783 A1 beschrieben.

Als Leuchtmittel werden in diesen Druckschriften LED's offenbart. Diese weisen jedoch selbst in flacher Bauweise eine gewisse Bauhöhe auf, die die Integration in eine Wand- oder Bodenfliese erschweren. Darüber hinaus ist eine flächige Beleuchtung nur unter Verwendung mehrerer LED's mit entsprechendem konstruktivem Aufwand bezüglich der Anordnung und des elektrischen Anschlusses möglich. Grundsätzlich sind LED's eher als Punktstrahler und nicht für die flächige Beleuchtung geeignet.

In der DE 20 2004 007 881 U1 wird ebenfalls eine Leuchtfliese offenbart, die als Leuchtmittel elektrolumineszierende Pigmente aufweist. Diese Art des Leuchtmittels weist jedoch einige Nachteile auf. So ist zum einen die Lebensdauer für eine in einem Gebäude zu installierende Fliese viel zu kurz. Auch die Leuchtstärke dieses Leuchtmittels ist sehr gering und darüber hinaus nicht konstant. Schließlich benötigt ein Leuchtmittel auf der Basis von elektrischer Lumineszenz eine vergleichsweise hohe Spannungsversorgung, was insbesondere die Anwendung in feuchter Umgebung verhindert und die Handhabung insgesamt durch entsprechend notwendige Sicherheitsmaßnahmen erschwert.

In der US 2005/0248935 A1 wird eine Leuchtfliese offenbart, mit einem Schichtaufbau, der eine Sichtplatte und mindestens ein Leuchtmittel umfasst, wobei als Leuchtmittel mindestens eine OLED vorgesehen ist.

Aufgabe der vorliegenden Erfindung war es daher, eine Leuchtfliese bereitzustellen, bei der die oben beschriebenen Nachteile vermieden werden und eine größere Gestaltungsmöglichkeit hinsichtlich der Art der Beleuchtung möglich ist.

Diese Aufgabe wird durch eine Leuchtfliese nach dem Oberbegriff des Patentanspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Leuchtfliese dadurch aus, dass als Leuchtmittel mindestens eine OLED vorgesehen ist.

Organische LED's (sogenannte OLED's) zeichnen sich dadurch aus, dass sie zum einen problemlos gleichmäßig flächig, jedoch auch in Strukturen aufgetragen werden können. Sie lassen sich beispielsweise in flüssiger Form mit einem Farbdrucker, insbesondere einem Tintenstrahldrucker, in Druckmustern auftragen.

Somit ist durch die Verwendung einer oder mehrerer OLED's eine große Gestaltungsmöglichkeit in der Struktur des Leuchtmittels möglich.

In einer einfachen Variante kann eine durchgehend flächige Beleuchtung durch eine entsprechend flächige Verteilung des Leuchtmittels realisiert werden. Es ist jedoch auch ohne Weiteres möglich, z. B. aus Designgründen, ein bestimmtes graphisches Muster mit dem Leuchtmittel zu realisieren.

Erfindungsgemäß wird die Leuchtfliese in einem Schichtaufbau mit wenigstens einer transparenten Platte und einer oder mehrerer OLED's aufgebaut. Zusätzlich ist ein Zwischenraum für die wenigstens eine OLED zwischen der Sichtplatte und eine rückseitigen Trägerplatte vorgesehen. Der Zwischenraum wird hierbei vorzugsweise so versiegelt, dass die OLED gegen Störeinflüsse aus der Umgebung, z. B. vor Verschmutzung, vor Luftsauerstoff oder dergleichen geschützt ist.

In einer bevorzugten Weiterbildung der Erfindung werden die elektrischen Anschlüsse des Leuchtmittels auf der Rückseite der Leuchtfliese vorgesehen. Auf diese Weise kann eine Kontaktierung erfolgen, die von der Betrachterseite her nicht sichtbar ist, sodass sich eine Leuchtfliese nahtlos und ohne störende Anschlüsse in das Fugenbild gemeinsam mit anderen Fliesen einfügen kann.

Die Anschlüsse können hierbei beispielsweise einen Rastkontakt umfassen, d. h. in einem solchen Fall werden Kontaktelemente im Untergrund angebracht, die beim Anlegen der Leuchtfliese mit einem passenden Gegenstück verrasten.

In einer anderen Ausführungsform wird ein Federkontakt vorgesehen, der beim Andrücken der Leuchtfliese an den Untergrund mit einem Gegenkontakt den elektrischen Kontakt herstellt.

Wie bereits oben erwähnt, wird vorteilhafterweise der elektrische Anschluss im Gebäude bauseitig vor der Montage der Leuchtfliese vorinstalliert, sodass beim Verlegen der Fliese der elektrische Anschluss, beispielsweise durch Verrastung oder durch Federdruck einfach zu schließen ist.

In einer Weiterbildung der Erfindung werden zwei oder mehrere OLED's vorgesehen. Derartige OLED's können gleichfarbig oder verschiedenfarbig ausgebildet sein. Hierdurch ergeben sich weitere Möglichkeiten in der Gestaltung der Beleuchtung. So kann beispielsweise eine bildhafte Gestaltung oder eine zeitliche Abfolge unterschiedlicher gleichfarbiger oder unterschiedlicher farbiger OLED's erfolgen und somit auch eine wechselnde Beleuchtung hervorgerufen werden.

Hierzu werden bevorzugt mehrere Kontakte bauseitig vorinstalliert, um die einzelnen OLED's separat ansteuern zu können.

In einer Weiterbildung dieser Ausführungsform wird eine Matrix von OLED-Pixeln und entsprechenden Kontaktelementen vorgesehen, so dass ein OLED-Display oder ein OLED-Monitor in einer solchen Leuchtfliese realisierbar ist.

Zur Verwirklichung eines Displays oder eines Monitors kann auch ein zusätzliches LCD vor einer OLED-Schicht angebracht werden. Die OLED-Schicht kann hierbei einfach als flächiges Leuchtmittel verwendet werden, da die gewünschten Strukturen durch eine Ansteuerung des LCD's hervorgerufen werden.

Neben der Strukturgebung durch entsprechende Verteilung einer oder mehrerer OLED's kann natürlich auch eine Abdeckschicht vorgesehen werden. Eine solche Abdeckschicht kann beispielsweise Beschriftungen, graphische Darstellungen oder dergleichen beinhalten, die sodann unter Verwendung einer OLED als Leuchtmittel zur Gestaltung der Beleuchtung der Leuchtfliese dienen.

Vorzugsweise wird zusätzlich wenigstens eine optische Filterschicht vorgesehen, um beispielsweise die Farbgebung des Leuchtmittels zu beeinflussen und/oder einen zusätzlichen Schutz gegen Verschmutzung zu bieten.

In einer besonders bevorzugten Ausführungsform der Erfindung werden zudem elektronische Bauelemente, beispielsweise Widerstände, Kapazitäten oder aktive Steuerungselemente in die Leuchtfliese integriert. Diese Bauelemente können beispielsweise in einer hinter der OLED angebrachten Schicht untergebracht werden. Die Leuchtfliese kann jedoch auch so gestaltet sein, dass nicht die vollständige Fläche durch das Leuchtmittel eingenommen wird, sondern ein Bereich, z. B. ein Randbereich für die Unterbringung derartiger elektronischer Bauelemente zur Verfügung steht.

In einer anderen Ausführungsform werden elektronische Bauelemente mit den Kontaktelementen als integrierte Baueinheit vorgesehen. Dabei können die Steuerungselemente fliesenseitig und/oder bauseitig vorgesehen werden.

Eine andere einfache Möglichkeit, derartige elektronische Baukomponenten unterzubringen besteht beispielsweise darin, die Aussparung für die Durchführung des elektronischen Kontakts auf der Rückseite, d. h. auf der Trägerplatte so groß vorzunehmen, dass neben der durchzuführenden Leitung zusätzlich die genannten Bauelemente Platz finden.

Ein Ausführungsbeispiel der Erfindung ist in der Zeichnung dargestellt und wird anhand der Figuren nachfolgend näher erläutert.

Im einzelnen zeigen
- Figur 1: eine schematische Schnittdarstellung durch eine erfindungsgemäße Leuchtfliese und
- Figur 2: eine Draufsicht auf eine erfindungsgemäße Leuchtfliese.

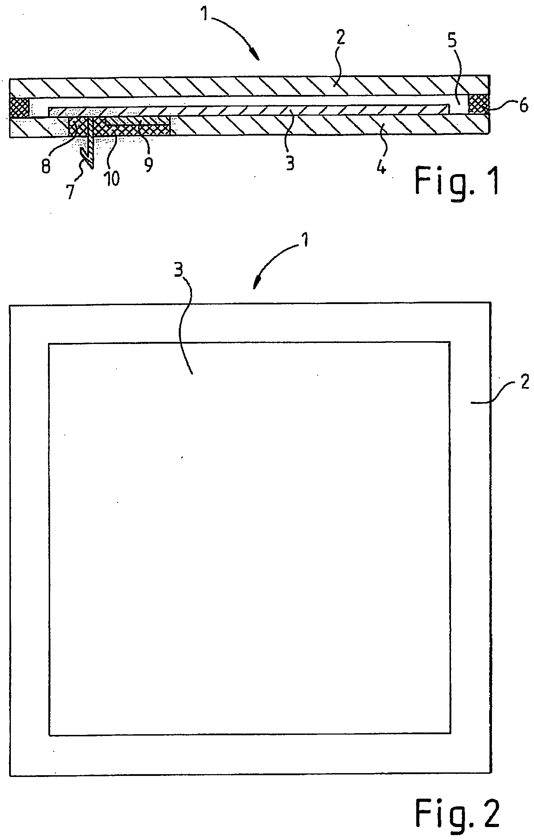

Die Leuchtfliese 1 gemäß Figur 1 ist mit einer wenigstens teilweise transparenten Sichtplatte 2 einer OLED-Schicht 3 sowie einer rückseitigen Trägerplatte 4 schichtweise aufgebaut. Grundsätzlich können auch weitere Zwischenschichten, beispielsweise Filterschichten vorgesehen werden.

Der Zwischenraum 5 zwischen der Sichtplatte 2 und der Trägerplatte 4 ist durch randseitige Dichtungen 6 abgedichtet, die zugleich als Abstandshalter dienen.

Die elektrische Kontaktierung der Leuchtfliese 1 erfolgt auf der Rückseite, wobei in Figur 1 beispielhaft ein hakenförmiger Rastkontakt 7 dargestellt ist. Der Rastkontakt 7 ist mit einer nicht näher dargestellten Elektrode der OLED-Schicht 3 verbunden und in der Lage, mit einem bauseitig im Gebäude angebrachten Gegenstück zu verrasten, sodass mit der Montage der Leuchtfliese 1 zugleich ein elektrischer Kontakt hergestellt ist. Weitere Kontakte, beispielsweise weitere Rastkontakte 7, die in einer Reihe mit dem dargestellten Rastkontakt 7 liegen können und somit in Figur 1 nicht sichtbar sind, können zur Ansteuerung der OLED-Schicht 3 vorgesehen werden.

Der Durchbruch 8 durch die Trägerplatte 4 ist so groß gehalten, dass zusätzliche Bauelemente, z. B. elektronische Steuerelemente 9 darin Platz finden. Zudem ist der Durchbruch 8 mit einer Dichtmasse 10, beispielsweise Silikon flüssigkeits- und gasdicht abgeschlossen.

In Figur 2 ist die Draufsicht auf die Leuchtfliese 1 ersichtlich. In dieser einfachen Variante ist das Leuchtmittel, d. h. die OLED-Schicht 3 als Viereck aufgetragen, sodass sich eine einfache flächige Beleuchtung ergibt. Wie bereits oben ausgeführt, besteht jedoch bei Verwendung einer OLED-Schicht ohne Weiteres die Möglichkeit, diese gemustert oder auf sonstige Weise graphisch ausgestaltet anzubringen. Auch die Verwendung mehrerer, unter Umständen ebenfalls graphisch gestalteter OLED-Elemente ist möglich. Durch Verwendung einer entsprechenden Steuerung können eine oder mehrere, gleichfarbig oder unterschiedlich farbige OLED's gleichzeitig oder in einer bestimmten Zeitfolge angesteuert werden.

Auch die Ausgestaltung eines Displays mit einer entsprechenden Anzahl von Pixeln und Kontaktelementen ist ohne Weiteres denkbar.

Die genaue Ausgestaltung einer OLED-Schicht 3 kann somit auf unterschiedlichste Art und Weise vorgenommen werden. Wesentlich für die Erfindung ist jedoch die große Variationsbreite der gestalterischen Möglichkeiten die sich durch Verwendung einer oder mehrerer OLED als Leuchtmittel für eine Leuchtfliese ergeben.

### Bezugszeichenliste:

- 1: Leuchtfliese
- 2: Sichtplatte
- 3: OLED-Schicht
- 4: Trägerplatte
- 5: Zwischenraum
- 6: Dichtung
- 7: Rastkontakt
- 8: Durchbruch
- 9: Steuerelement
- 10: Dichtmasse

## Patentansprüche

1. Leuchtfliese mit einem Schichtaufbau, der eine Sichtplatte (2), eine rückseitige Trägerplatte (4) und einen abgedichteten Zwischenraum (5) zwischen der Sichtplatte (2) und der Trägerplatte (4) für die mindestens eine OLED (3) aufweist, **dadurch gekennzeichnet, dass** auf der der Sichtplatte (2) gegenüberliegenden Rückseite als elektrischer Anschluss ein Rast- und/oder Federkontakt (7) für die mindestens eine OLED (3) vorgesehen ist und wobei elektronische Bauelemente (9) in der Aussparung (8) für die Durchführung eines Rast- und/oder Federkontakts (7) auf der Rückseite der Leuchtfliese (1) angeordnet sind.

2. Leuchtfliese nach Anspruch 1, **dadurch gekennzeichnet, dass** zwei oder mehrere OLED's vorgesehen sind.

3. Leuchtfliese nach Anspruch 1 oder 2, **dadurch gekennzeichnet, dass** mehrere Kontakte für verschiedene OLED's vorgesehen sind.

4. Leuchtfliese nach mindestens einem der Ansprüche 1 bis 3 **dadurch gekennzeichnet, dass** eine Beschriftung, ein Druckbild und/oder eine LCD zur zusätzlichen Gestaltung der Leuchtfliese vorgesehen sind.

5. Leuchtfliese nach mindestens einem der Ansprüche 1 bis 4 **dadurch gekennzeichnet, dass** eine optische Filterschicht vorgesehen ist.

6. Leuchtfliese nach mindestens einem der Ansprüche 1 bis 5 **dadurch gekennzeichnet, dass** ein oder mehrere elektronische Bauelemente (9) in die Leuchtfliese (1) integriert sind.

## Claims

1. Light-emitting tile having a layer structure which has a visible plate (2), a support plate (4) on the reverse side and a sealed interspace (5) between the visible plate (2) and the support plate (4) for the at least one OLED (3), **characterised in that** a snap-in and/or spring contact (7) for the at least one OLED (3) is provided as electrical connection on the reverse side opposite the visible plate (2) and where electronic components (9) are arranged on the reverse side of the light-emitting tile (1) in the recess (8) for passing-through a snap-in and/or spring contact (7).

2. Light-emitting tile according to Claim 1, **characterised in that** two or more OLEDs are provided.

3. Light-emitting tile according to Claim 1 or 2, **characterised in that** a plurality of contacts for various OLEDs are provided.

4. Light-emitting tile according to at least one of Claims 1 to 3, **characterised in that** an inscription, a print image and/or an LCD are provided for additional design of the light-emitting tile.

5. Light-emitting tile according to at least one of Claims 1 to 4, **characterised in that** an optical filter layer is provided.

6. Light-emitting tile according to at least one of Claims 1 to 5, **characterised in that** one or more electronic components (9) are integrated into the light-emitting tile (1).

## Revendications

1. Carreau émetteur de lumière présentant une structure de couches qui comporte une plaque visible (2), une plaque de support (4) sur la face arrière et un espacement scellé/étanche (5) entre la plaque visible (2) et la plaque de support (4) pour l'au moins une OLED (3), **caractérisé en ce qu'**un contact par encliquetage et/ou par ressort ou élastique (7) pour l'au moins une OLED (3) est/sont prévu(s) en tant que connexion électrique sur la face arrière opposée de la plaque visible (2) et où des composants électroniques (9) sont agencés sur la face arrière du carreau émetteur de lumière (1) dans l'évidement (8) ménagé pour faire passer au travers un contact par encliquetage et/ou par ressort ou élastique (7).

2. Carreau émetteur de lumière selon la revendication 1, **caractérisé en ce que** deux OLED ou plus sont prévues.

3. Carreau émetteur de lumière selon la revendication 1 ou 2, **caractérisé en ce que** les contacts d'une pluralité de contacts pour diverses OLED sont prévus.

4. Carreau émetteur de lumière selon au moins l'une des revendications 1 à 3, **caractérisé en ce qu'**une inscription, une image d'impression et/ou un affichage à cristaux liquides (LCD) sont prévus pour un modèle supplémentaire du carreau émetteur de lumière.

5. Carreau émetteur de lumière selon au moins l'une des revendications 1 à 4, **caractérisé en ce qu'**une couche de filtre optique est prévue.

6. Carreau émetteur de lumière selon au moins l'une des revendications 1 à 5, **caractérisé en ce qu'**un ou plusieurs composant(s) électronique(s) (9) est/sont intégré(s) à l'intérieur du carreau émetteur de lumière (1).
